# EUROPÄISCHE PATENTSCHRIFT

(11) **EP 0 906 706 B1**
(45) Veröffentlichungstag und Bekanntmachung des Hinweises auf die Patenterteilung: **21.01.2004**
(21) Anmeldenummer: 97929103.6
(22) Anmeldetag: 13.06.1997
(51) Int. Cl.: H04Q 3/62

(54) **VERFAHREN ZUR UNTERSTÜTZUNG VON PRIVATEN NUMMERIERUNGSPLÄNEN DURCH ÖFFENTLICHE TELEKOMMUNIKATIONSNETZE**
PROCESS FOR SUPPORTING PRIVATE NUMBERING SCHEMES BY PUBLIC TELECOMMUNICATIONS SYSTEMS
PROCEDE POUR ASSISTER DES PLANS PRIVES DE NUMEROTATION PAR DES RESEAUX DE TELECOMMUNICATIONS PUBLICS

(30) Priorität: 14.06.1996 DE 19623689
(43) Veröffentlichungstag der Anmeldung: 07.04.1999
(73) Patentinhaber: T-Mobile Deutschland GmbH, 53227 Bonn (DE)
(72) Erfinder: DENNERT, Thomas, D-53844 Troisdorf (DE)
(74) Vertreter: Riebling, Peter, Dr.-Ing.
(86) Internationale Anmeldenummer: PCT/DE1997/001210
(87) Internationale Veröffentlichungsnummer: WO 1997/048242

(56) Entgegenhaltungen:
- US-A- 4 348 554
- US-A- 4 982 421
- US-A- 5 377 186
- US-A- 5 490 212
- DISCOVERING A NEW WORLD OF COMMUNICATIONS, CHICAGO, JUNE 14 - 18, 1992, Bd. 2 OF 4, 14.Juni 1992, INSTITUTE OF ELECTRICAL AND ELECTRONICS ENGINEERS, Seiten 561-565, XP000326744 ATOUI M: "VIRTUAL PRIVATE NETWORK CALL PROCESSING IN THE INTELLIGENT NETWORK"
- NACHRICHTEN ELEKTRONIK UND TELEMATIK, Bd. 48, Nr. 8/09, August 1994, Seiten 34-37, XP000468756 NOUVORTNE D ET AL: "DIE VIRTUELLE ORGANISATION ORGANISATORISCHE UND TECHNISCHE ASPEKTE VON CORPORATE NETWORKS (TEIL 2)"
- NTT REVIEW, Bd. 6, Nr. 4, 1.Juli 1994, Seiten 48-52, XP000460336 SHIJI ICHIKAWA ET AL: "MEMBERSNET VPN SERVICE"

## Beschreibung

Die Erfindung betrifft ein Verfahren zur Unterstützung von privaten Nummerierungsplänen durch öffentliche Telekommunikationsnetze.

Innerhalb der Telekommunikation stellt das Zusammenwachsen von zahlreichen öffentlichen sowie privaten Netzen erhebliche Ansprüche an einen gemeinsam zu benutzenden, öffentlichen Numerierungsplan im Bereich der öffentlichen Telekommunikationsnetze.

Ein Problem stellt hierbei die Durchwahl von einem einzelnen Anschluß oder aus einem privaten (Teil-) Netz über das öffentliche Netz in ein anderes privates (Teil-)Netz dar. Hierbei benötigt das öffentliche Netz in der vom anrufenden Teilnehmer gewählten Zielrufnummer eine Information für die Lenkung und Weiterleitung des Rufes vom privaten ursprungsanschluß zum privaten Zielnetz, dargestellt entsprechend dem öffentlichen Numerierungsplan des öffentlichen Netzes. Zusätzlich benötigt das private Zielnetz in der Zielrufnummer eine Information zum Ansteuern des Zielendgerätes (z.B. eine Durchwahlnummer), dargestellt entsprechend dem privaten Numerierungsplan des Zielnetzes.

Die Länge der Rufnummer in öffentlichen Netzen ist durch den üblicherweise benutzten E.164 Numerierungsplan beschränkt. Gemäß CCITT E.164 sieht die Planung ab 1997 hierbei maximal 15 Ziffern vor, wobei absehbar ist, daß diese Länge nicht weltweit unterstützt werden wird. Somit ergeben sich Schwierigkeiten bei der Übermittlung der im privaten.Zielnetz zur Adressierung des Endteilnehmers benötigten Rufnummer, da zunächst etliche Ziffern entsprechend des Rufnummernplans des öffentlichen Netzes benötigt werden um den Ruf durch das öffentliche Netz zu lenken und zudem die private Rufnummer des Zielanschlusses übertragen werden muß.

Ein weiteres Problem bildet die Tatsache, daß die öffentlichen Rufnummernpläne typischerweise hierarchisch entsprechend der Netztopologie aufgebaut sein müssen, d.h. für die Vermittlungen der einzelnen Netzebenen werden jeweils einzelne Stellen der Rufnummer verbraucht (Beispiel: Ziffern 1 bis 2 für das Zielland, Ziffern 3 bis 4 für die Vermittlungen der Fernebene, Ziffern 5 bis 6 für die Vermittlungen der Ortsebene und danach kommen die lokalen Zielrufnummern).
Bei diesem Verfahren werden Teile des knappen Rufnummernvolumen nicht ausgenutzt und zwangsläufig entsteht eine Abhängigkeit zwischen geographischem Ort einer Zielanlage und deren Rufnummer.

Der bisher bekannte Stand der Technik bezieht sich vor allem auf den Einsatz virtueller Privatnetze (PVN: Private Virtual Network), und macht Vorschläge für Erweiterungen und Verbesserungen solcher Systeme.

Aus DISCOVERING A NEW WORLD OF COMMUNICATIONS; CHIGAGO; JUNE 14 - 18, 1992, Bd. 2 OF 4, 14. Juni 1992, INSTITUTE OF ELECTRICAL AND ELECTRONICS ENGINEERS, Seiten 561 - 565, XP000326744 ATOUI M: "VIRTUAL PRIVATE NETWORK CALL PROCESSING IN THE INTELLIGENT NETWORK" ist eine Anrufbearbeitung in einem virtuellen Privatnetz bekannt, von dessen Merkmalen im Oberbegriff des Patentanspruchs 1 ausgegangen wird. Dabei wird eine Verbindung innerhalb eines virtuellen Privatnetzes und der Benutzung einer intelligenten Netzstruktur erreicht. Der rufende Teilnehmer wählt dabei eine Rufnummer, die innerhalb der intelligenten Netzstruktur analysiert wird und mit Hilfe einer Datenbank die zugehörige Rufnummer des angerufenen Teilnehmers ermittelt wird. Mittels diesen Informationen kann dann ein Rufaufbau vom anrufenden Teilnehmer zum angerufenen Teilnehmer des privaten Telekommunikationsnetzes erfolgen. Dabei ist in der vom Teilnehmer gewählten Rufnummer die Durchwahl des angerufenen Teilnehmers nicht explizit enthalten.

Die US-A-5,377,186 bezieht sich auf ein Verfahren und ein System zur Bereitstellung von verbesserten Teilnehmerdienstleistungen von mindestens einer Datenbank und zur Bereitstellung dieser Dienstleitungen für die einzelnen Teilnehmer des Telekommunikationsnetzes. Dies kann durch den Einsatz eines intelligenten Netzwerkes erreicht werden.

Die US-A-4,348,554 betrifft ein Verfahren zur Bereitstellung von virtuellen Privatnetzdienstleistungen über ein öffentliches Telekommunikationsnetz. Dabei ist eine Datenbank vorhanden, welche ein virtuelles Privatnetz definiert. Der Verbindungsaufbau zwischen den Teilnehmerstationen es virtuellen Privatnetzes erfolgt dabei über das öffentliche Telekommunikationsnetz unter Berücksichtigung der in der Datenbank gespeicherten Verbindungsdaten.

Aus der US-A-4,982,421 ist es bekannt, in einem virtuellen Privatnetz eine Punkt-zu-Punkt-Verbindung dadurch herzustellen, daß jeder der Teilnehmerstationen eine durch den Teilnehmer nicht wählbare netzinterne Rufnummer zugeordnet ist, anhand derer ein Verbindungsaufbau zu der anderen Teilnehmerstation erfolgt, immer dann, wenn eine Teilnehmerstation z. B. durch abnehmen des Hörers aktiviert wird. Durch den automatischen Verbindungsaufbau mittels der nicht wählbaren, netzinternen Rufnummern soll verhindert werden, daß die Teilnehmerstationen von anderen, fremden Teilnehmern angerufen werden können.

Die US-A-5,490,212 betrifft ein Rufleitungssystem für eine virtuelles Privatnetzwerk, welches aus zwei oder mehreren privaten Kommunikationseinheiten besteht, welche über ein öffentliches Telekommunikationsnetz miteinander verbunden sind. Zum Verbindungsaufbau zwischen Teilnehmer des privaten Netzwerkes wählt der Teilnehmer eine definierte Rufnummer, welche im öffentlichen Telekommunikationsnetz umgesetzt wird und zur Wegeleitung des Anrufes an die angerufene Teilnehmerstation dient.

Alle die oben genannten Schriften zum Stand der Technik beziehen sich auf virtuelle private Netze. Im Gegensatz dazu ist das hierin beschriebene Verfahren nicht auf virtuelle private Netze bezogen, sondern bezieht sich auf eine Unterstützung von privaten Nummerierungsplänen durch öffentliche Telekommunikationsnetze, also ausschließlich auf eine Realisierung innerhalb eines öffentlichen Telekommunikationsnetzes.

Aufgabe der Erfindung ist es, ein Verfahren vorzuschlagen das es erlaubt, Gespräche mit Durchwahlen basierend auf beliebigen privaten Nummerierungsplänen über ein öffentliches Telekommunikationsnetz zu vermitteln.

Die Aufgabe wird durch die Merkmale des Patentanspruchs 1 gelöst.

Das Verfahren ermöglicht die Durchwahl aus dem öffentlichen Netz in private Netze oder Nebenstellenanlagen mit einer erheblich größeren Rufnummernlänge als dies bei herkömmlichen Ansteuerungen möglich ist. Ferner erlaubt es dem Netzbetreiber eine erheblich flexiblere Zuteilung von Nummern auf die angeschlossenen Endeinrichtungen unabhängig von Netztopologie oder Standort der Endeinrichtung. Dies bedeutet auch eine effektivere Nutzung des knappen Rufnummernvolumen von öffentlichen Netzen.
Das beschriebene Verfahren basiert auf intelligenten Steuerungsmechanismen innerhalb des öffentlichen Netzes und ist durch geeignete Maßnahmen des Betreibers eines öffentlichen Netzes umsetzbar. Somit sind keine Änderungen oder Ergänzung in der Signalisierung oder Funktionalität der zahlreichen betroffenen privaten Netze oder Nebenstellenanlagen notwendig. Auch benutzte öffentliche Transitnetze werden keiner Modifikation unterworfen.

Das Verfahren unterstützt beliebige öffentliche und private Telekommunikationsnetze und Anlagen bei denen der Aufbau einer Verbindung auf der Übertragung von Zielrufnummern basiert. Beispiel hierfür sind insbesondere private Netze mit Q-SIG oder ISDN (DSS 1) Signalisierung, öffentliche Netze mit ISDN (ISUP) oder TUP Signalisierung, jedoch auch ältere Netze mit z.B. R2, IKZ50 Wahlverfahren sind grundsätzlich geeignet. Öffentliches wie privates Netz können hierbei sowohl analoge wie digitale Übertragungstechnik unterstützen, Telephonie oder Daten übertragen, sowie ein Festnetz wie auch ein Funknetz bilden.

Die Dienstlogik des Verfahren basiert auf einem zentralen Dienstknoten (SCP) und einer Dienstdatenbank (SDP) die mit den Vermittlungen des öffentlichen Netzes kommuniziert und diese steuert. Eine typische Umsetzung einer solchen Basis bildet die IN-(Intelligent Network) Technologie gemäß CCITT Q12XX Serie (siehe auch ETSI CORE INAP Protokoll gemäß ETS 300 374).

Die hier beschriebene Methode löst das eingangs bezeichnete Problem, indem der für das private Zielnetz benötigte Teil der Rufnummerninformation nicht über das Signalisierungssystem des öffentlichen Netzes zwischen den Vermittlungen übertragen wird, sondern über eine zentrale Datenbank zwischen Ursprungs- und Zielvermittlung des öffentlichen Netzes ausgetauscht wird. Beim Aufbau eines Rufes für ein privates Netz (bzw. eine private Nebenstellenanlage) wird dies in der Ursprungsvermittlung des öffentlichen Netzes erkannt. Dies kann entweder anhand von fest für den Ursprung im öffentlichen Netz eingetragenen Daten oder anhand von der Zielrufnummer vorangestellten Zielauswahlziffern geschehen. Die Wahlinformation aus dem privaten Netz wird zunächst in einem zentralen Dienstknoten eines intelligenten Netzes (IN) gespeichert und analysiert.

Über die Logik dieses Dienstknotens wird dann eine Rufnummer entsprechend dem öffentlichen Rufnummernplan des öffentlichen Netzes generiert, mittels der zunächst der Rufaufbau mit dem Schalten der Verbindungswege von der Ursprungsvermittlung zur Zielvermittlung gesteuert wird. Ein erster Teil dieser Rufnummer ist hierbei der Zielvermittlung fest zugeordnet, ein zweiter Teil wird jeweils nur temporär für einen Verbindungsaufbau erzeugt und benutzt. Anhand der speziellen Rufnummer wird in der Zielvermittlung die Notwendigkeit einer erneuten Abfrage des zentralen Dienstknoten erkannt und durchgeführt. Die Dienstlogik erkennt anhand der in der Zielrufnummer enthaltenen temporär vergebenen Bezugskennung die bereits behandelte Transaktion und versorgt die Zielvermittlung mit der bei der ersten Abfrage gespeicherten Zielrufnummer für das private Netz. Mit dieser kann nun der Ruf in das private Netz weiter aufgebaut werden.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor. Dabei zeigt:
- Figur 1:: Prinzip eines erfindungsgemäßen Rufaufbaus zwischen privaten Netzen;
- Figur 2:: Erster Teil der Dienstlogik;
- Figur 3:: Zweiter Teil der Dienstlogik;
- Figur 4:: Prinzip eines erfindungsgemäßen Rufaufbaus zwischen einem Endgerät und einer privaten Nebenstellenanlage.

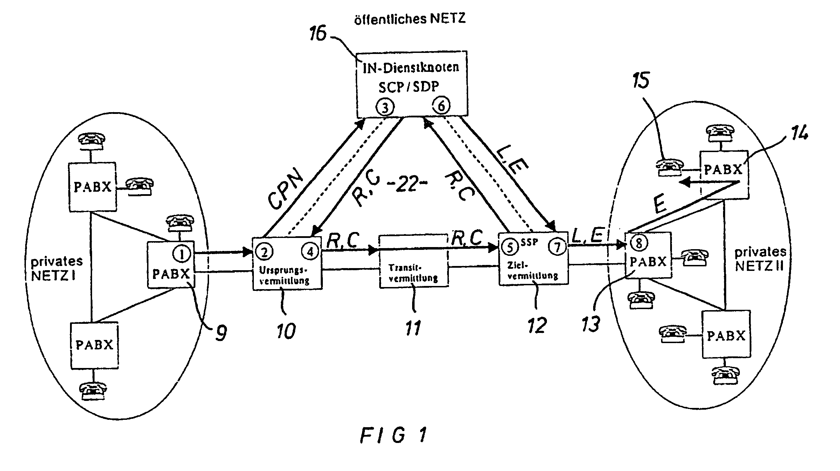

Das Szenario in Figur 1 zeigt ein Beispiel für den Verbindungsaufbau zwischen zwei privaten Netzen mittels des vorgestellten Verfahrens. Die Vermittlungen 10-12 des öffentlichen Netzes (Gateway-Vermittlungen), welche zwei private Teilnetze bedienen, sind hierbei jeweils zugleich Dienstvermittlungspunkte (Service Switching Point, SSP) eines intelligenten Netzes (IN), welche die Dienste dieses IN-Netzes unterstützen. Das Numerierungsverfahren wird hierbei in den Dienstlogik- (SCP, Service Control Point) und Dienstdatenbank- (SDP, Service Data Point) Komponenten des Intelligenten Netzes abgewickelt. Im folgenden sind die einzelnen Schritte eines Verbindungsaufbaus erläutert:

### Schritt 1:

Im privaten Teilnetz I wird von einer automatischen Nebenstellenvermittlung 9 (PABX, Private Automatic Branch Exchange) ein verbindungsaufbau zum privaten Teilnetz II initiiert der über das öffentliche Netz aufgebaut werden soll. Hierzu wird eine Rufnummer CPN (Called Party Number) verwendet, die z.B. aus den Anteilen N₁..Nₖ und E₁..Eₚ aufgebaut ist. Der optionale Anteil N₁..Nₖ adressiert hierbei das Zielnetz, d.h. das private Netz II, der Anteil E₁..Eₚ bildet die private Adresse innerhalb des Zielnetzes, z.B. für den Nebenstellenanschluß 15.

### Schritt 2:

Die Ursprungsvermittlung 10 des öffentlichen Netzes 22 erkennt die Notwendigkeit einer speziellen Behandlung der Rufnummerninformation. Diese Erkennung kann sowohl auf der Analyse des Anteils N₁..Nₖ der gewählten Rufnummer basieren als auch anhand von lokal für diesen Netzübergang abgespeicherten Dienstdaten, in welchen z.B. festgelegt ist, daß alle von der anrufenden privaten PABX 9 kommenden Gespräche einem bestimmten Zielnetz zugeordnet werden sollen. Der Rufaufbau wird zunächst unterbrochen und die Informationen aus dem Rufaufbau werden dem IN-Dienstknoten 16 (IN-SCP) mittels einer Meldung (InitialDetectionPoint) gemäß des INAP-Protokolls (Intelligent Network Application Part) übermittelt.

### Schritt 3:

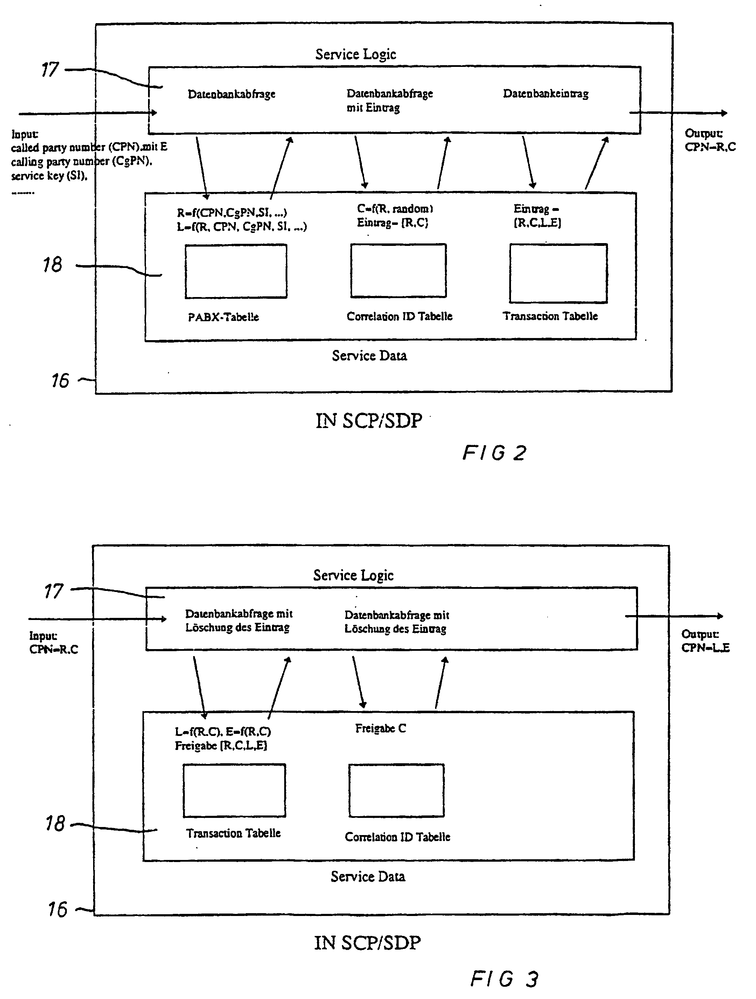

Die Dienstlogik 17 (Figur 2) analysiert die Rufnummerninformation und ermittelt das gewünschte Zielnetz II anhand des mitgelieferten Nummernanteils N₁..Nₖ und/oder anhand von allgemeinen oder auch speziell für das Ursprungsnetz I abgelegten spezifischen Daten (z.B. virtueller privater Rufnummernplan, VPN). Hierbei wird anhand einer in einer Datenbank 18 gespeicherten Zuordnungstabelle die für den Verbindungsaufbau zur Zielvermittlung 12 benötigte Rufnummer R = R₁..Rₘ entsprechend dem öffentlichen Rufnummernplan des öffentlichen Netzes ermittelt, sowie die lokal von dieser Zielvermittlung 12 benötigte Rufnummer L = L₁..Lₙ zur Ansteuerung der Zielnetzes II (z.B. der privaten Vermittlungen PABX 13, PABX 14). Ferner wird eine für den Nutzungszeitraum einmalig existierende temporäre Bezugskennung C=C₁..C_{q} (Correlation Identity) generiert, welche sicherstellt, daß die von der Dienstlogik generierten Daten während des Rufaufbaus von den beteiligten Vermittlungsstellen abgefragt und dem entsprechenden Anrufwunsch zugeordnet werden können. Der Rufnummernanteil E₁..Eₚ, welcher die Zieladresse darstellt, wird während des Rufaufbaus in der Dienstdatenbank 18 des IN-Knotens abgespeichert und nicht über das Signalisierungssystem (Vermittlungen 10-12) des öffentlichen Netzes 22 übertragen. Da die Notwendigkeit der Übertragung der Zielrufnummer E₁..Eₚ des privaten Netzes über das Signalisierungssystem des öffentlichen Netzes entfällt, steht für die Routingummer R eine hohe Ziffernlänge zur Verfügung, welche zur Leitweglenkung durch beliebige, auch dritte, öffentliche Netze benutzt werden kann.

Die Dienstlogik 17 generiert nun einen Eintrag in der Dienstdatenbank 18 und speichert in dieser:
a) Informationen über die Rufnummer R=R₁..Rₘ, die für den Verbindungsaufbau zur Zielvermittlung 12 benötigt wird,
b) die temporäre Bezugskenung: C=C₁..Cq zur internen Datenzuordnung,
c) die für die Zielvermittlung 12 geltende lokale Kennung L=L₁..Lₙ zum Verbindungsaufbau mit dem Zielnetz II,
d) den Anteil E=E₁..Eₚ der ursprünglich gewählten Rufnummer (CPN), der im privaten Netz die Zielrufnummer des angerufenen Endteilnehmers bestimmt.

Schließlich übermittelt der Dienstknoten 16 (SCP) die Routinginformation R verknüpft mit der temporären Bezugskennung C als neue Zielrufnummer R₁..Rₘ, C₁..C_{q} an die Ursprungsvermittlung 10, mittels eines INAP Befehls (CONNECT).

### Schritt 4:

Mittels der vom IN-Knoten übermittelten Rufnummer R wird der Rufaufbau zur Zielvermittlung 12 es öffentlichen Netzes durchgeführt. Der Weg kann hierbei über beliebige Transitknoten 11 des eigenen oder fremden öffentlicher Netze geführt werden.

### Schritt 5:

Die Zielvermittlung 12 erkennt anhand der Rufnummer R die Notwendigkeit einer erneuten Abfrage des IN-Dienstknotens 16 (SCP) und sendet an diesen eine INAP Meldung (InitialDetectionPoint).

### Schritt 6:

Der IN-Dienstknoten 16 (SCP) ermittelt anhand der Rufnummerninformation R, C in der INAP Meldung den zuvor gespeicherten Eintrag in der Dienstdatenbank 18 (SDP) (Figur 3). Hierzu dient insbesondere die temporäre Referenz C, welche nach diesem Vorgang gelöscht und wieder zur erneuten Benutzung freigegeben werden kann. Anhand der unter Schritt 3 beschriebenen Daten des Eintrag wird die endgültige Verbindung zum privaten Zielnetzwerk II initiiert (INAP CONNECT Befehl). Hierbei wird die Adresse L aus der für die Zielvermittlung geltenden lokalen Referenz des Netzübergang zum privaten Netz II, sowie der zuvor gespeicherten Zielruf nummer E gebildet: L₁..Lₙ, E₁..Eₚ. Die lokale Referenz L des Netzübergangs bildet hierbei eine kurze Rufnummer zur Adressierung des privaten Netzes II aus dem in der Zielvermittlung 12 eingetragenen Rufnummernplan. Diese Rufnummer ist nur in diesem Knoten für diesen Zweck eingetragen und kann sich innerhalb des Versorgungsbereichs einer anderen Vermittlung wiederholen.

### Schritt 7:

Die Vermittlung 12 initiiert mittels der Rufnummer L den weiteren Rufaufbau in Richtung privates Netz II zusammen mit der innerhalb des privaten Netzes angerufenen Zielrufnummer E (Nebenstelle 15).

### Schritt 8:

Innerhalb des privaten Netzes wird die Zielrufnummer E anhand des privaten Rufnummernplan ausgewertet und die Verbindung mit dem entsprechenden Telekommunikationsziel (Nebenstelle 15) hergestellt.

### Beispiel 2:

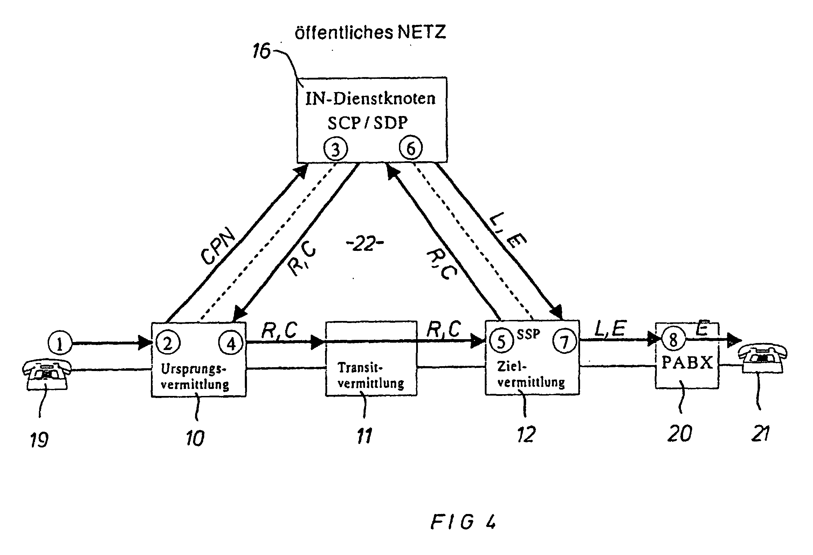

Das Szenario in Figur 4 zeigt ein Beispiel für den Verbindungsaufbau eines Endgeräts zu einer Nebenstelle einer privaten Nebenstellenanlage mittels der vorgestellten Methode. Die Vermittlungen 10-12 des öffentlichen Netzes 22, welche das Endgerät 19 und die Zielanlage 20 bedienen sind hierbei jeweils zugleich Dienstknoten (Service Switching Point, SSP) eines intelligenten Netzes (IN). Der Numerierungsdienst wird hierbei in den SCP- und SDP-Komponenten des Intelligenten Netzes abgewickelt.
Im folgenden sind die einzelnen Schritte erläutert:

### Schritt 1 :

Ein Telekommunikationsendgerät 19 wählt die Rufnummer einer Nebenstellenanlage 20 und der daran angeschlossenen Nebenstelle 21. Die Rufnummer (CPN) setzt sich hierbei z.B. zusammen aus den Anteilen D₁..Dᵢ, P₁..P_{*J*} und E₁..Eₚ, mit:
D=D₁..Di: Dienstkennung innerhalb des öffentlichen Netzes für die Anwahl von Nebenstellenanlagen,
P=P₁..Pⱼ: Numerierung der im öffentlichen Netz vorhandenen Nebenstellen; das Numerieungsschema ist hierbei Sache des Netzbetreibers, es kann sich z.B. um eine einfache Durchnumerierung aller vorhandenen Systeme handeln,
E=E₁..Eₚ: Nebenstellennummer innerhalb der privaten Zielanlage; diese Nummer wird nur innerhalb der Zielnebenstellenanlage verwaltet, nicht innerhalb des öffentlichen Netzes.

### Schritt 2:

Die Vermittlung 10 des öffentlichen Netzes 22 erkennt die Anwahl einer Nebenstellenanlage 20 anhand der Analyse der gewählten Rufnummer (Anteil D₁..Dᵢ). Der Rufaufbau wird zunächst unterbrochen und die Informationen aus dem Rufaufbau dem IN-Dienstknoten 16 (IN-SCP) mittels einer INAP Meldung (InitialDetectionPoint) übermittelt.

### Schritt 3:

Die Dienstlogik 17 analysiert die Information über den Rufaufbau und ermittelt anhand des Anteil P=P₁..Pⱼ der gewählten Nummer die angerufene Zielanlage 20. Für diese sind in der Datenbank 18 des Dienstknotens 16 alle relevanten Daten gespeichert. Somit kann die Rufnummer R=R₁..Rₘ der Zielvermittlung 12 (Routingnummer), entsprechend dem öffentlichen Rufnummernplan des öffentlichen Netzes ermittelt werden, sowie die lokal in dieser Zielvermittlung 12 geltende Rufnummer L=L₁..Lₙ. zur Ansteuerung der privaten Nebenstellenanlage 20. Ferner wird eine für den Nutzungszeitraum einmalig existierende temporäre Bezugskennung C=C₁..C_{q} (Correlation Identity) generiert. Da die Notwendigkeit der Übertragung der Zielrufnummer des privaten Netzes E₁..Eₚ über das Signalisierungssystem des öffentlichen Netzes entfällt, steht für die Routingnummer R eine hohe Ziffernlänge zur Verfügung, welche zur Leitweglenkung durch beliebige auch dritte öffentliche Netze benutzt werden kann.

Die Dienstlogik 17 generiert nun einen Eintrag in der Dienstdatenbank 18 (SDP) und speichert in diesem:
a) die Information/Rufnummer R=R₁..Rₘ, die für die Lenkung der Verbindung zur Zielvermittlung 12 benötigt wird,
b) die temporäre Bezugskennung: C=C₁..C_{q},
c) die für die Zielvermittlung 12 geltende lokale Kennung L=L₁..Lₙ des Zielnetzes 20,
d) den Anteil E=E₁..Eₚ der ursprünglich gewählten Rufnummer (CPN), der für das private Netz als Zielrufnummer benötigt wird.

Schließlich übermittelt der Dienstknoten 16 (SCP) die Routinginformation R verknüpft mit der temporären Kennung C als neue Zielrufnummer R₁..Rₘ, C₁..C_{q} an die Ursprungsvermittlung 10, mittels eines INAP Befehls (CONNECT).

### Schritt 4 bis Schritt 8:

Entsprechend der Handhabung im Beispiel 1 gemäß Figuren 1, 2 und 3.

## Patentansprüche

1. Verfahren zur Unterstützung von privaten Nummerierungsplänen durch öffentliche Telekommunikationsnetze, bei dem über das öffentliches Telekommunikationsnetz eine Verbindung zwischen einem Teilnehmer eines beliebigen Telekommunikationsnetzes und einem Teilnehmer eines privaten Telekommunikationsnetzes aufgebaut wird, wobei der Verbindungsaufbau anhand einer vom rufenden Teilnehmer gewählten, frei definierbaren Rufnummer erfolgt, wobei ein für den abschließenden Verbindungsaufbau zum und innerhalb des privaten Telekommunikationsnetzes benötigte Teil der Rufnummer nicht über das Signalisierungssystem der beteiligten Vermittlungen des öffentlichen Netzes übertragen wird, sondern über eine in einem Dienstknoten des öffentlichen Netzes eingerichtete Datenbank direkt zwischen Ursprungs- und Zielvermittlung des öffentlichen Netzes ausgetauscht wird, **dadurch gekennzeichnet, daß** die vom rufenden Teilnehmer gewählte Rufnummer (CPN), welche die Endadresse (E) des gerufenen Endgerätes enthält, von der Ursprungsvermittlung (10) zunächst an einen zentralen Dienstknoten (16) eines intelligenten Netzes (IN) weitergegeben, und dort gespeichert und analysiert wird,
daß über eine Logik (17) dieses Dienstknotens anhand der Rufnummer (CPN) eine interne Rufnummer (R, C) der Zielvermittlung (12), entsprechend dem öffentlichen Rufnummernplan des öffentlichen Netzes und eine lokale Rufnummer (L) des gerufenen privaten Netzes (II) generiert wird und die einzelnen Rufnummern (R, C, L, E) in einer Dienstdatenbank (18) abgelegt werden,
daß die interne Rufnummer (R, C) an die Ursprungsvermittlung (10) zurückgegeben, und damit zunächst der Rufaufbau von der Ursprungsvermittlung (10) zur Zielvermittlung (12) gesteuert wird, wobei der erste Teil (R) dieser Rufnummer der Zielvermittlung (12) fest zugeordnet ist, und der zweite Teil (C) jeweils nur temporär für den Verbindungsaufbau benutzt wird,
daß in der Zielvermittlung (12) anhand der Rufnummer (R, C) die Notwendigkeit einer erneuten Abfrage des zentralen Dienstknotens (16) erkannt und durchgeführt wird,
daß die Dienstlogik (17) anhand der in der Zielrufnummer (R, C) enthaltenen temporär vergebenen Bezugskennung (C) die bereits behandelte Transaktion erkennt und die Zielvermittlung (12) mit der bei der ersten Abfrage gespeicherten Rufnummer (L, E) für das private Netz (II) versorgt,
daß mit den Rufnummer (L, E) der weitere Verbindungsaufbau zum und im privaten Netz (II) erfolgt.

2. Verfahren nach Anspruch 1, **dadurch gekennzeichnet, daß** die vom anrufenden Teilnehmer gewählte Rufnummer (CPN) beliebig viele Ziffern aufweisen kann.

3. Verfahren nach einem der Ansprüche 1 oder 2, **dadurch gekennzeichnet, daß** die einer bestimmten Zielvermittlung zugeordnete lokale Rufnummer (L) eines privaten Netzes auch in anderen Vermittlungen zur Adressierung eines anderen privaten Netzes verwendet werden kann.

## Claims

1. Method for supporting private numbering plans by public telecommunications networks in which a connection is constructed between a subscriber of any telecommunications network and a subscriber of a private telecommunications network via the public telecommunications network, construction of the connection taking place using a freely definable call number dialled by the calling subscriber, wherein a part of the call number required for completing the construction of the connection to and within the private telecommunications network is not transmitted via the signalling system of the public network exchanges involved, but is exchanged directly between the originating and the destination exchange of the public network via a database created in a service node of the public network, **characterised in that**
the call number (CPN) dialled by the calling subscriber and containing the end address (E) of the called terminal is first forwarded by the originating exchange (10) to a central service node (16) of an intelligent network (IN) and there stored and analysed,
**in that** via a logic (17) of this service node, using the call number (CPN), an internal call number (R, C) of the destination exchange (12), corresponding to the public call number plan of the public network, and a local call number (L) of the called private network (II) is generated and the individual call numbers (R, C, L, E) are filed in a service database (18),
**in that** the internal call numbers (R, C) are returned to the originating exchange (10) and therefore first the construction of the call from the originating exchange (10) to the destination exchange (12) is controlled, the first part (R) of this call number being permanently assigned to the destination exchange (12), and the second part (C) being used in each case only temporarily for constructing the connection,
**in that** in the destination exchange (12), using the call numbers (R, C), the necessity of renewed interrogation of the central service node (16) is identified and carried out,
the service logic (17) identifies the already dealt with transaction using the reference identifier (C) issued temporarily and contained in the destination call number (R, C) and supplies the destination exchange (12) with the call number (L, E) for the private network (II) stored during the first interrogation,
and **in that** further construction of the connection to and in the private network (II) takes place with the call numbers (L, E).

2. Method according to claim 1, **characterised in that** the call number (CPN) dialled by the calling subscriber can have any number of digits.

3. Method according to one of claims 1 or 2, **characterised in that** the local call number (L) of a private network assigned to a specific destination exchange can also be used in different exchanges for addressing a different private network.

## Revendications

1. Procédé pour le soutien de plans de numérotation privés par des réseaux de télécommunication publics, selon lequel une communication est établie par l'intermédiaire du réseau de télécommunication public entre un abonné d'un réseau de télécommunication quelconque et un abonné d'un réseau de télécommunication privé, étant précisé que l'établissement de la communication se fait à l'aide d'un numéro d'appel composé par l'abonné appelant et librement définissable, et qu'une partie du numéro d'appel qui est nécessaire à l'établissement final de la communication avec ledit réseau privé ou à l'intérieur de celui-ci n'est pas transmise par l'intermédiaire du système de signalisation des centraux impliqués du réseau public, mais est échangée directement entre le central de départ et le central d'arrivée par l'intermédiaire d'une banque de données installée dans un noeud de service du réseau public,
**caractérisé en ce que** lé numéro d'appel (CPN) composé par l'abonné appelant, qui contient l'adresse finale (E) du terminal appelé, est tout d'abord transmis par le central de départ (10) à un noeud de service central (16) d'un réseau intelligent (IN), où il est mis en mémoire et analysé,
**en ce que** par l'intermédiaire d'un système logique (17) de ce noeud de service, à l'aide de ce numéro d'appel (CPN), un numéro d'appel interne (R, C) du central d'arrivée (12), selon le plan de numérotation public du réseau public, et un numéro d'appel local (L) du réseau privé (II) appelé sont générés et les numéros d'appel individuels (R, C, L, E) sont déposés dans une banque de données de service (18),
**en ce que** le numéro d'appel interne (R, C) est renvoyé au central de départ (10) et ainsi, l'établissement de la communication est tout d'abord commandé du central de départ (10) vers le central d'arrivée (12), la première partie (R) de ce numéro d'appel étant attribuée définitivement au central d'arrivée (12) tandis que la seconde partie (C) n'est utilisée que temporairement pour l'établissement de la communication,
**en ce que** dans le central d'arrivée (12), à l'aide du numéro d'appel (R, C), la nécessité d'une nouvelle interrogation du noeud de service central (16) est détectée et cette interrogation est effectuée,
**en ce que** le système logique de service (17) détecte, grâce à l' identification de référence (C) contenue dans le numéro d'appel de destination (R, C) et attribuée temporairement, la transaction déjà traitée et fournit au central d'arrivée (12) le numéro d'appel (L, E), mis en mémoire lors de la première interrogation, pour le réseau privé (II),
**en ce que** la suite de l'établissement de la communication vers et dans le réseau privé (II) se fait avec les numéros (L, E).

2. Procédé selon la revendication 1, **caractérisé en ce que** le numéro d'appel (CPN) composé par l'abonné appelant peut comporter un nombre de chiffres quelconque.

3. Procédé selon la revendication 1 ou 2, **caractérisé en ce que** le numéro d'appel local (L) d'un réseau privé qui est attribué à un central d'arrivée défini peut aussi être utilisé dans d'autres centraux pour l'adressage d'un autre réseau privé.
